(19) Europäisches Patentamt
European Patent Office
Office européen des brevets

(11) EP 1 591 512 A1

(12) EUROPEAN PATENT APPLICATION

(43) Date of publication:
**02.11.2005 Bulletin 2005/44**

(51) Int Cl.$^7$: **C09K 19/34**

(21) Application number: **04009863.4**

(22) Date of filing: **26.04.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicant: **AZ Electronic Materials (Germany) GmbH**
**65203 Wiesbaden (DE)**

(72) Inventors:
- **Hornung, Barbara, Dl.**
  **63594 Hasselroth (DE)**
- **Schmidt, Wolfgang, Dr.**
  **63303 Dreieich (DE)**
- **Wingen, Rainer, Dr.**
  **65719 Hofheim (DE)**
- **Amakawa, Haruki**
  **436-0027 Shizuoka Pref. (JP)**
- **Nonaka, Toshiaki**
  **436-0027 Shizuoka Pref. (JP)**

(74) Representative: **Huhn, Michael et al**
**Isenbruck Bösl Hörschler**
**Wichmann Huhn**
**Patentanwälte**
**Theodor-Heuss-Anlage 12**
**68165 Mannheim (DE)**

(54) **Chiral smectic liquid crystal mixture**

(57) A chiral smectic liquid crystal mixture having a spontaneous polarisation of < 20 $nC/cm^2$, comprises at least 1 compound from each of the groups A (consisting of Aa and Ab) and B of achiral materials and C of chiral materials

$$R^1\text{-}A^1\text{-}A^2\text{-}R^2 \qquad R^1\text{-}A^1\text{-}A^2\text{-}B\text{-}R^2$$

Aa Ab

wherein in compound Aa one of $A^1/A^2$ is pyrimidine-2,5-diyl or pyridine-2,5-diyl; and in compound Ab one of $A^1/A^2$ is pyrimidine-2,5-diyl or pyridine-2,5-diyl, the other is phenylene-1,4-diyl or cyclohexane-1,4-diyl;
and the other variables are as defined in the claims.

EP 1 591 512 A1

## Description

The present invention relates to a chiral smectic liquid crystal mixture and a novel active matrix (AM) liquid crystal device or display containing same. More particularly, it relates to a ferroelectric liquid crystal mixture, which enables the generation of grey levels and full colour representation useful for computer monitors, TV, DVD, Video and other displays. In particular these displays are useful for high speed applications and for yielding a strong colour saturation by improved backlight techniques which rely upon a high speed liquid crystal. A further aspect of this invention are active matrix displays containing such a mixture, particularly in a monostable geometry.

Monostable chiral smectic liquid crystal geometry has been proposed to be combined with active matrix technology to simultaneously allow the utilization of a very high 'pixel speed' and show a gray scale, contrary to bistable SSFLC displays.

Takatoh et. al. (6th International Conference on Ferroelectric Liquid Crystals, 1997, 20-24 July, Brest, France; M. Takatoh et al. 1998, SID Digest, 1171-1174.) have demonstrated an AM display based upon chiral smectics using a very high $P_s$ material driven with an active matrix with polycrystalline Silicon -TFT. Nito et.al. (Nito et al., 1993, Journal of the SID, 1/2, 163-169.) have suggested a monostable AM-FLC-device with much lower $P_s$, however, with the disadvantage of a stripey FLC texture which is not suitable for high contrast displays without further improvements. Furue et. al. (Furue, H. et al., 1998, IDW '98, 209 - 212) suggested a polymer stabilized SSFLCD with a FELIX® mixture with a material having a moderate $P_s$ value.

Asao et. al. have presented a monostable FLC mode (Y. Asao et al., ILCC 2000, Sendai, and Jpn. J. Appl. Phys. 38, L534-L536, 1999 therein called "half-V-shape FLC" mode; see also T. Nonaka et.al., Liquid Crystals 26(11), 1599-1602, 1999, therein called "CDR" mode). Such displays provide, by virtue of their smaller Ps values, solutions for the gray scale problem and the resolution limitation caused by too large $P_s$ values in active matrix panels. However, a smaller Ps value is not sufficient to switch the FLC at lower temperature.

For the practical display application, a wide operating temperature range (large $\Delta T$ = HT (high temperature driving limit) - LT (low temperature driving limit)) is required in view of customer demands. Hence the liquid crystal display has to meet both low temperature and high temperature operating demands simultaneously.
In general, viscosities of liquid crystals increase drastically with lowering the temperature, causing slower switching response or even non-switching. Decreasing the number of grey scales or a lower frame rate can help to extend the low temperature limit of driveability, but deterioration in image quality is inevitable. A larger Ps value also improves the switching property at low temperature, but is not preferable due to the reason described above.
Lowering the viscosity of the chiral smectic mixture by using more 2-ring materials is feasible in order to improve the low temperature switching, but this is at the sacrifice of the high temperature property.

The limit of high temperature driving is defined by the Sc* / Ch phase transition temperature. The driving temperature limit is not identical with the phase transition temperature, but it cannot be above this phase transition temperature. Three-ring (bridged, not-bridged) materials are preferably added to the mixture to raise the high temperature limit of driveability.
The chiral smectic liquid crystal mixtures proposed to date for TFT-FLCD applications as disclosed in, e.g. WO99/60441, US 6,551,668, US 6,605,323, WO00/36054, WO00/55684, WO00/69987, US 6,482,479 or EP-A-1 208 182 , are not optimized with respect to the operating temperature range, including both high temperature and low temperature simultaneously.

US 6,551,668 teaches that heterocyclic components (e.g. with a pyrimidine, thiazole or thiadiazole moiety) are inferior to fluoro aromatics as constituents of chiral smectic mixtures for TFT-FLCD applications, whereas US 6,605,323 teaches that fluorinated nitrogen heterocycles (e.g. 2-fluoro-pyridine, 3-fluoro-pyridine or 4-fluoro-pyrimidine) are superior to phenyl pyrimidines and 2,3-difluorophenyl pyrimidines.

According to the present invention it was found that a mixture representing a combination of heterocyclic moieties and fluorinated aromatics is superior for fast response driving over an extended working temperature range.

The objective of the present invention was therefore to provide a chiral smectic liquid crystal mixture and an active matrix liquid crystal display containing same with good driveability at low and high temperatures and large $\Delta T$.

The FLC material according to invention is a chiral smectic liquid crystal mixture with a spontaneous polarisation < 20 $nC/cm^2$ and good driveability at low and high temperatures and large $\Delta T$, comprising at least 1 compound from each of the groups A (consisting of Aa and Ab) and B of achiral materials and C of chiral materials

$$R^1\text{-}A^1\text{-}A^2\text{–}R^2 \qquad\qquad R^1\text{-}A^1\text{-}A^2\text{–}B\text{-}R^2$$

**Aa** **Ab**

$$R^3\text{-}(\text{-}A^3\text{-}M^3)_a\text{-}E^1\text{-}(M^4\text{-}A^4)_b\text{-}R^4$$

**B**

$$R^5\text{-}(\text{-}A^5\text{-}M^5)_c(\text{-}A^6\text{-}M^6)_d(\text{-}A^7\text{-}M^7)_e(\text{-}A^8\text{-}M^8)_f\text{-}R^6$$

**C**

with the meaning

| | |
|---|---|
| **a, b** | 0, 1 or 2 , the sum of a and b 2 or 3 |
| **c, d, e, f** | 0 or 1, the sum of c and d and e and f 2 or 3 or 4 |
| **$R^1$, $R^2$, $R^3$, $R^4$** | independently hydrogen, alkyl or alkyloxy with 1 to 16 C atoms, alkenyl or alkenyloxy with 2 to 16 C atoms, wherein in either case<br><br>a1) one or two non-terminal non-adjacent $-CH_2-$ groups can be replaced by -O- , -OC(=O)- , -(C=O), -C(=O)O-, $-Si(CH_3)_2-$, -C≡C- and wherein also one or several $-CH_2-$ groups can be replaced by $-CF_2-$<br>a2) one $-CH_2-$ group can be replaced by phenylene-1,4-diyl (optionally substituted once or twice by F ), cyclohexane-1,4-diyl (optionally substituted by F or CN) oder cylopropane-1,2-diyl<br><br>with the proviso that within the couples $R^1$ / $R^2$ and $R^3$ / $R^4$, resp., only one can be hydrogen |
| **$R^5$** | Hydrogen, alkyl or alkyloxy with 1 to 16 C atoms, alkenyl or alkenyloxy with 2 to 16 C atoms, wherein one or two non-adjacent $-CH_2-$ groups can be replaced by - OC(=O)- or -C(=O)O- or $-Si(CH_3)_2-$ oder cylopropan-1,2-diyl and wherein also one or several $-CH_2-$ groups can be replaced by $-CF_2-$; or $R^6$ |
| **$R^6$** | a moiety with at least one asymmetric C atom, which is<br>either part of an alkyl group of 3-12 C atoms, wherein also one or two $-CH_2-$ groups can be replaced by -O- or -OC(=O) or -C(=O)O- and wherein at least one of the substituents at the asymmetric C atom is selected from $-CH_3$, $-CF_3$, $-OCH_3$, $-CH_3$, Cl, F or part of a 3-7 membered carbocycle (wherein also one or two non-adjacent $-CH_2-$groups can replaced by -O- or a $-CH_2-$ group can be replaced by -OC(=O)- or -C(=O)O-) |
| **B** | phenylene-1,4-diyl or cyclohexan-1,4-diyl |
| **$E^1$** | 2,3-difluoro-phenylene-1,4-diyl or 2-fluoro-pyridine-3,6-diyl or (1,3,4)thiadiazole-2,5-diyl |
| **$A^1$, $A^2$** | independently phenylene-1,4-diyl, 2-fluoro-phenylene-1,4-diyl, 2,3-difluorophenylene-1,4-diyl, pyrimidine-2,5-diyl, pyridine-2,5-diyl |

with the provisos

in compound Aa one of $A^1$ / $A^2$ is pyrimidine-2,5-diyl or pyridine-2,5-diyl

in compound Ab one of $A^1$/$A^2$ is pyrimidine-2,5-diyl or pyridine-2,5-diyl, the other is phenylene-1,4-diyl or cyclohexane-1,4-diyl

**$A^3$, $A^4$** independently phenylene-1,4-diyl, optionally substituted by one or two F, cyclohexa..T1e-l,4-diyl, optionally substituted by F, $CH_3$ or CN , pyridine-2,5-diyl, pyrimidine-2,5-diyl, 1,3-dioxane-2,5-diyl, 1,3-dioxaborinane-2,5-diyl

**$A^5$ , $A^6$, $A^7$, $A^8$** independently phenylene-1,4-diyl, optionally substituted by one or two F, cyclohexane-1,4-diyl, optionally substituted by F, $CH_3$ or CN, cyclohex-1-en-1,4-diyl, optionally substituted by F, $CH_3$ or CN, cyclohex-2-en-1,4-diyl, optionally substituted by F, $CH_3$ or CN, 1-alkyl-1-sila-cyclohexane-1,4-diyl, bicyclo[2.2.2]octan-1,4-diyl, indane-2,6-diyl, optionally substituted by one or several F, naphthalene-2,6-diyl, optionally substituted by one or several F, 1,2,3,-4-tetrahydronaphthalene-2,6-diyl, optionally substituted by one or several F, phenanthrene-2,7-diyl, optionally substitued by one or several F, 9,10-dihydrophenanthrene-2,5-diyl, optionally substituted by one or several F, fluorene-2,7-diyl, optionally substituted by one or several F, dibenzofuran, optionally substituted by one or several F, pyridine-2,5-diyl, 2-fluoro-pyridine-3,6-diyl, 3-fluoro-pyridine-2,5-diyl, pyrimidine-2,5-diyl, 4-fluoro-pyrimidine-2,5-diyl, thiazole-2,5-diyl, optionally substituted by F, thiazole-2,4-diyl, optionally substituted by F, thiadiazole-2,5-diyl, isoxazole-3,5-diyl, dioxane-2,5-diyl, 1,3-dioxaborinane-2,5-diyl

**$M^3$, $M^4$ , $M^5$,$M^6$, $M^7$, $M^8$,** independently a single bond, -OC(=O)-, -C(=O)O-, -OC(=O)O-, $-CH_2O-$, $-OCH_2-$, $-CF_2O-$, $-OCF_2-$, $-CH_2CH_2-$, -CH=CH-, $-CH_2\text{-}O\text{-}CH_2CH_2-$, $-CH_2CH_2CH_2CH_2$ - or -C≡C-.

When a or b are 2, then each of the two $A^3$-$M^3$ and $M^4$-$A^4$ can be chosen independently, thus independent

of the meaning of the other group $A^3$-$M^3$ and $M^4$-$A^4$.

Preferably the mixture comprises at least 3 compounds of group B.
Preferably the compounds of group B constitute at least 10 % by weight, specifically 15 to 75 % by weight of the total mixture.

More preferably these at least 3 compounds of group B are selected from the sub groups B2, B3 and B4:

$$R^3(-A^3-M^3)_a-E^2-(M^4-A^4)_b-R^4$$

**B2**

wherein $E^2$ is 2,3-difluoro-phenylene-1,4-diyl

$$R^3(-A^3-M^3)_a-E^3-(M^4-A^4)_b-R^4$$

**B3**

wherein $E^3$ is 2-fluoro-pyridine-3,6-diyl

$$R^3(-A^3-M^3)_a-E^4-(M^4-A^4)_b-R^4$$

**B4**

wherein $E^4$ is (1,3,4)thiadiazole-2,5-diyl

Even more preferably the mixture comprises at least 3, compounds out of two different groups B2, B3 and B4. Specifically it contains at least 5 compounds out of B2, B3 and B4.

Preferably B3 is a compound of the formula B3a and B4 is a compound of the formula B4a

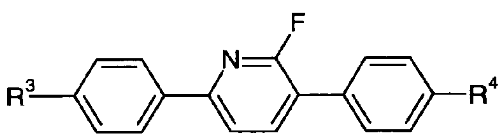

**B3a**

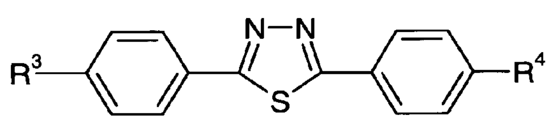

**B4a**

Thus, the present invention provides a chiral smectic liquid crystal mixture that can be driven with low voltage at both low and high temperatures. The mixture according to the invention exhibits a wide operating temperature range. The liquid crystal mixture according to the invention can be used in active matrix liquid crystal displays.

A further object of the invention is a chiral smectic liquid crystal display device, operated in an active matrix panel comprising the above described mixtures, that can be driven at low and high temperatures. The active matrix liquid crystal device comprises the chiral smectic liquid crystal mixture.

A further object of the invention is a chiral smectic liquid crystal display device operated in an active matrix panel using the above described mixtures. With preference this display is a monostable chiral smectic, such as selected from the group consisting of half V-shape, V-shape, CDR or short pitch FLC displays. Each of these modes can also be combined with "polymer-stabilization" (cp. e.g. Jpn. J. Appl. Physics 38, L534 (1999)).

A further object of the invention is the use of the above described chiral smectic mixtures operated in an active matrix panel, especially if the liquid crystal is in a monostable chiral smectic mode.

The liquid crystal mixtures according to the invention are prepared in a manner which is customary *per se.* As a rule the components are dissolved in one another, advantageously at elevated temperatures.

Optional additional constituents of the mixtures according to invention are compounds D

$$R^1-A^{11}-A^{12}-M^{12}-A^{13}-R^2$$

**D**

with the meaning

**$R^1$**, **$R^2$** as above
**$A^{11}$, $A^{12}$** independently phenylene-1,4-diyl, 2-fluoro-phenylene-1,4-diyl, 2,3-difluorophenylene-1,4-diyl, pyrimidine-2,5-diyl, pyridine-2,5-diyl, 3-fluoro-pyridine-2,5-diyl
**$A^{13}$** cyclohexane-1,4-diyl, 1-cyclohexen-1,-4-diyl, 2-cyclohexen-1,4-diyl, thiophene-2,5-diyl, optionally substituted by F, or thiophene-2,4-diyl, optionally substituted by F
**$M^{12}$** -OC(=O)- , $-OCH_2-$, -C(=O)O-, $-CH_2O-$ or -OC(=O)O-

with the proviso that at least one of $A^{11}$ , $A^{12}$ is pyrimidine-2,5-diyl or pyridine-2,5-diyl or 3-fluoro-pyridine-2,5-diyl, of which at least one can be obtained in the liquid crystal mixtures.

Preferably the compounds D constitute 8 to 35% by weight of the total mixture.

Optional additional constituents of the mixtures according to invention are compounds E

$$R^1\text{-}A^{14}\text{-}M^{14}\text{-}A^{15}\text{-}M^{15}\text{-}A^{16}\text{-}M^{16}\text{-}A^{17}\text{-}R^2$$

**E**

with the meaning

**$R^1$**, **$R^2$** as above
**$A^{14}$, $A^{15}$, $A^{16}$, $A^{17}$** independently phenylene-1,4-diyl, optionally substituted by one or two F, cyclohexane-1,4-diyl, optionally substituted by F, $CH_3$ or CN, cyclohex-1-en-1,4-diyl, optionally substituted by F, $CH_3$ or CN, cyclohex-2-en-1,4-diyl, optionally substituted by F, $CH_3$ or CN, 1-alkyl-1-sila-cyclohexane-1,4-diyl, bicyclo[2.2.2]octan-1,4-diyl, indane-2,6-diyl, optionally substituted by one or several F, naphthalene-2,6-diyl, optionally substituted by one or several F, 1,2,3,-4-tetrahydronaphthalene-2,6-diyl, optionally substituted by one or several F, phenanthrene-2,7-diyl, optionally substitued by one or several F, 9,10-dihydrophenanthrene-2,5-diyl, optionally substituted by one or several F, fluorene-2,7-diyl, optionally substituted by one or several F, dibenzofuran, optionally substituted by one or several F, pyridine-2,5-diyl, 2-fluoro-pyridine-3,6-diyl, 3-fluoro-pyridine-2,5-diyl, pyrimidine-2,5-diyl, 4-fluoro-pyrimidine-2,5-diyl, thiazole-2,-5-diyl, optionally substituted by F, thiazole-2,4-diyl, optionally substituted by F, thiadizole-2,5-diyl, isoxazole-3,5-diyl, dioxane-2,5-diyl, 1,3-dioxaborinane-2,5-diyl
**$M^{14}$ , $M^{15}$, $M^{16}$** independently a single bond, -OC(=O)-, -C(=O)O-, -OC(=O)O-, $-CH_2O-$, $-OCH_2-$, $-CF_2O-$, $-OCF_2-$, $-CH_2CH_2-$, -CH=CH-, $-CH_2\text{-}O\text{-}CH_2CH_2-$, $-CH_2CH_2CH_2CH_2-$ or $-C\equiv C-$

of which at least one can be contained in the liquid crystal mixtures.

These optional additional constituents of the mixture D and E, resp., can be added to fine-tune the mixture with respect to parameters relevant for application, such as smectic C* /Cholesteric (Sc*/Ch) transition temperature, Cholesteric / Isotropic (Ch/I) transition temperature, Crystalline / smectic C* (C/Sc*) transition temperature, dielectrical anisotropy $\Delta\varepsilon$, optical anisotropy $\Delta n$.

Preferably the compounds of group E constitute 1 to 10% by weight in the total mixture.

Optional additional constituents of the mixtures according to invention are materials that increase the light stability, specifically UV stabilizers, e.g. of the "benzophenone" type, "benzotriazole" type or HALS (hindered amine light stabilizer) type. Preferably the mixtures may contain 0.001 wt.-% to 5 wt.-% of one or several UV stabilizers; especially preferred are mixtures containing 0.01 wt.-% to 1 wt.-% of one or several UV stabilizers. With this respect reference is made to US 2003 0127627, which is hereby incorporated by reference.

Optional additional constituents of the mixtures according to invention are materials that increase the stability against oxidative degradation (antioxidants, e.g. of the "sterically hindered phenol" type). Preferably the mixtures may contain 0.001 wt.-% to 5 wt.-% of one or several antioxidants; especially preferred are mixtures containing 0.1 wt.-% to 5 wt.-% of one or several antioxidants. With this respect reference is made to US 2003 0127627, which is hereby incorporated by reference.

Optionally the mixtures according to invention may contain a combination of UV stabilizers and antioxidants.

Chiral smectic liquid crystal mixtures according to the invention are particularly suitable for use in electro-optical switching and display devices (displays). These displays are usually constructed in such a way that a liquid crystal layer is enclosed on both sides by layers which are usually, in this sequence starting from the LC layer, at least one alignment layer, electrodes and a limiting sheet (for example of glass). In addition, they can contain spacers, adhesive frames, polarizers and, for color displays, thin color-filter layers, or they are operated in the sequential backlight technique. Other possible components are antireflection, passivation, compensation and barrier layers and, for

active-matrix displays, electric nonlinear elements, such as thin-film transistors (TFTs) and metal-insulator-metal (MIM) elements. The structure of liquid crystal displays has already been described in detail in relevant monographs see, for example, T. Tsukuda, "TFT/LCD Liquid crystal displays addressed by thin film transistors", Japanese Technology Reviews, 1996 Gordon and Breach, ISBN 2-919875-01-91.

An active matrix liquid crystal display within the scope of this invention can also be an optical element that acts as a light valve or a device used to change the polarization state of light by means of a field-induced re-orientation of the smectic liquid crystal molecules, in particular an FLCOS (ferroelectric liquid crystal on silicon), an optical shutter and the like.

In a preferred embodiment the FLC display is operated in the monostable mode with an active matrix panel.

Several documents are cited in this application, e.g. to discuss the state of the art, synthesis of compounds used in the present invention or application of the mixtures according to the invention. All these documents are hereby incorporated by reference.

## Examples

Mixtures are prepared from the following compounds

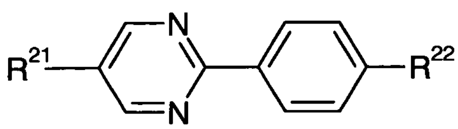

**a1**

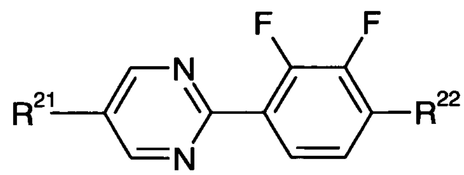

**a2**

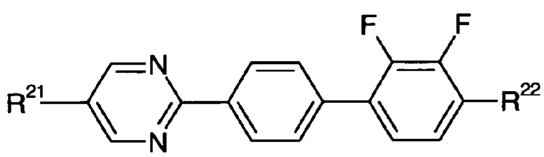

**b2**

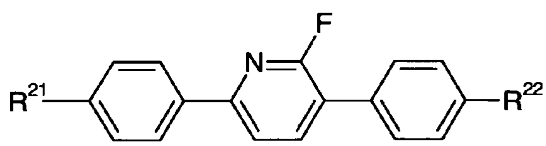

**b3**

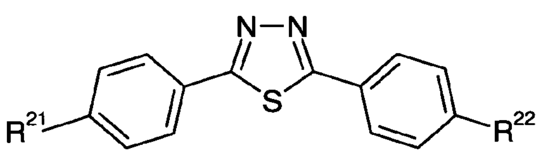

**b4**

chiral

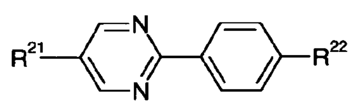

**c1**

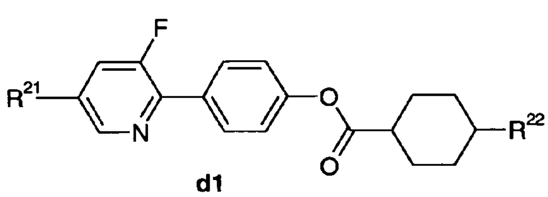

**d1**

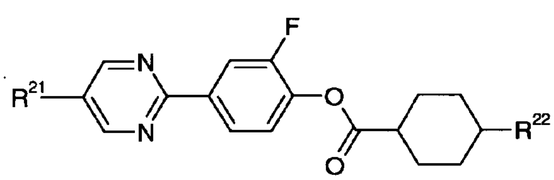

**d2**

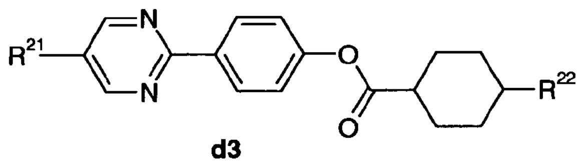

d3

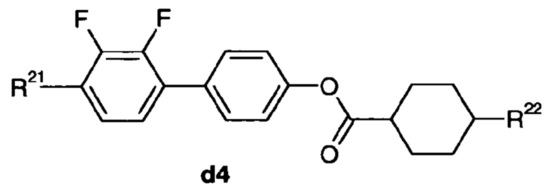

d4

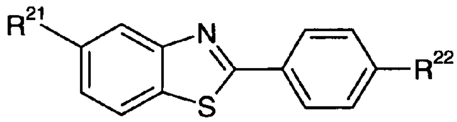

x1

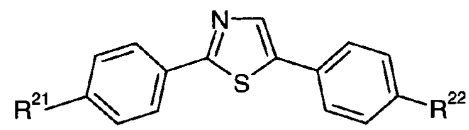

x2

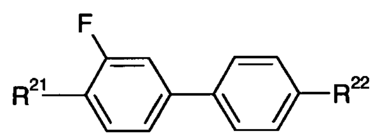

x3

Experiment

A test cell was prepared in the following way.

A solution of LQT 120 (Hitachi Kasei) is applied onto glass substrates with ITO by spin coating at 2500 rpm. The electrode area was 0.9 $cm^2$. The substrates are heated at 200°C for 1 hour to form a film. After rubbing the coated film with a nylon cloth in one direction, the substrates are assembled into a cell with spacers having a thickness of 1.5 μm inserted between the substrates in such a manner that the rubbing directions are anti-parallel to each other.

All tested mixtures are filled into the cell in the isotropic phase. An uniform monostable alignment follows cooling progressively through the cholesteric and the smectic C* with a small bias dc voltage of 3 V during the cholesteric (Ch) - smectic C* (Sc*) phase transition.

The cell is placed in the Mettler hot stage on a polarizing microscope, equipped with a photodiode to measure the optical transmission between crossed polarisers. The cell is aligned such, that with no voltage applied it appears dark due to the optical axis being arranged parallel to one of the polarizers.

Phase transition temperatures (Sc* to Ch and Ch to Isotropic (Iso)) are determined by the microscopic observation with +1°C/min. The Sawyer- Tower method was used to determine the spontaneous polarization value. The test cell has 5 μm thickness and is coated with ITO.

VT-characteristic and temperature dependence

A voltage and transmittance (T) curve (VT-characteristics) is obtained by the following manner. 0% transmittance and 100% transmittance are defined as crossed polarizers and parallel polarizers, respectively. A rectangular wave form (180Hz) is applied to measure the VT-characteristics with changing of the applied voltage from 0V to 5V. An applied wave form, electrical field (E), and optical response (O) are illustrated in Fig.1. The % transmission (T(%)) is illustrated. The high temperature driving limit is about 5 °C below the phase transition temperature Sc* to Ch due to the beginning of alignment deterioration.

The low temperature driving limit for the test material is defined as the temperature where the transmittance value is 50% of the transmittance value that is measured at 30°C under 180Hz, 5V rectangular waveform.

Reference 1

A chiral smectic liquid crystal composition LC-1 was prepared by mixing the following compounds in the indicated proportions.

LC-1

| Group | Content | Structure |
|---|---|---|
| Aa | 15% | 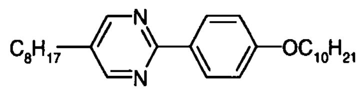 |
| Aa | 10% | 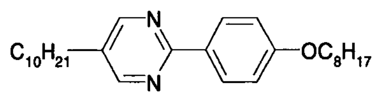 |
| Aa | 7% | 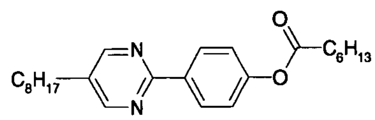 |
| Aa | 7% | 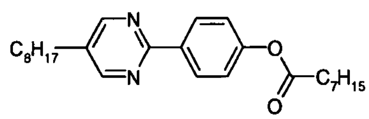 |
| Ab | 13% | 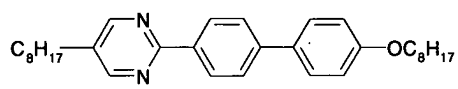 |
| d3 | 7% | 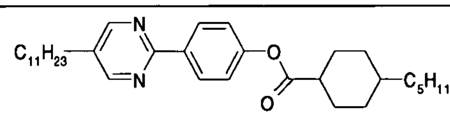 |
| D | 30% | 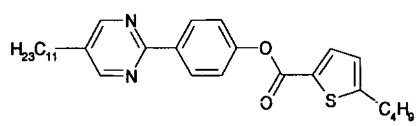 |
| D | 7% | 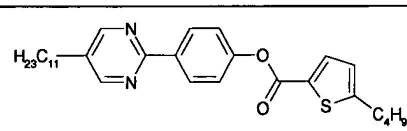 |
| C | 4% | 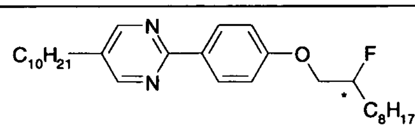 |

Physical properties and the high and low temperature driving limits and ΔT are summarized in Table-1A.
Table-1B show the material groups for each mixture.
LC-1 exhibits a Sc* - Ch phase transition temperature of 65 °C, therefore the high temperature driving limit is 60 °C.
The low temperature driving limit was measured as 1 °C.

Fig. 2 shows the temperature (Te) dependence of the transmittance (Tr) with rectangular wave form, 180 Hz, 5 V.

Example 1

A chiral smectic liquid crystal composition LC-2 was prepared by mixing the following compounds in the indicated proportions.
Physical properties and the high and low temperature driving limits and ΔT are summarized in Table-1A.
Table-1B show the material groups for each mixture.

LC-2

| Group | Content | Structure |
|---|---|---|
| Aa | 5% | 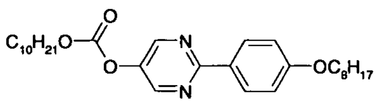 |
| Aa | 6% | 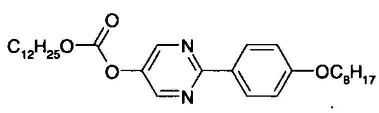 |
| Aa | 5% | 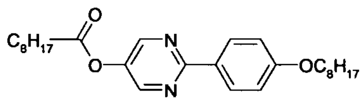 |
| Aa | 5% | 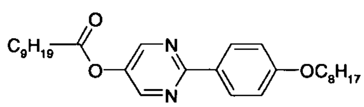 |
| Aa | 8% | 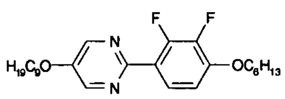 |

| | | |
|---|---|---|
| Ab | 5% | 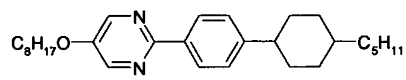 |
| Ab | 14% | 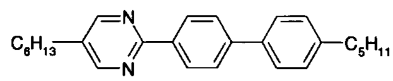 |
| B2 | 6% | 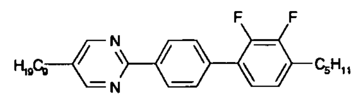 |
| B2 | 6% | 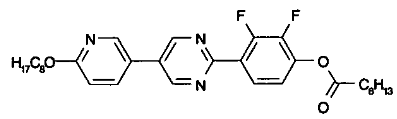 |
| d3 | 5% | 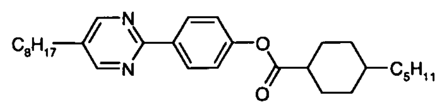 |
| d3 | 5% | 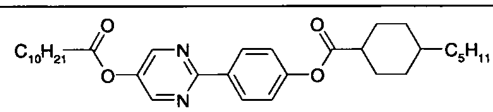 |
| B2 | 5% | 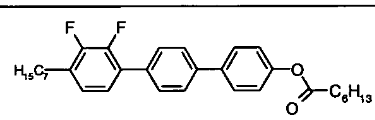 |
| d3 | 5% | 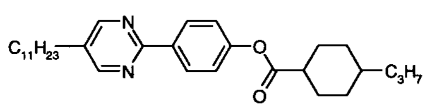 |
| X1 | 13% | 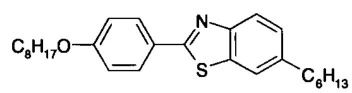 |
| C | 7% | 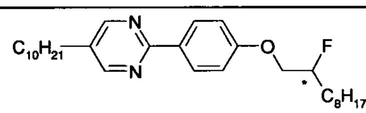 |

Example 2

LC-3 was prepared by mixing the following compounds including materials out of group B3 in the indicated proportions. Physical properties and the high and low temperature driving limits and ΔT are summarized in Table-1A. Table-1B show the material groups for each mixture.
LC-3 achieves both a higher phase transition temperature and a lower driving temperature limit.

LC-3

| Group | Content | Structure |
|---|---|---|
| Aa | 5% | 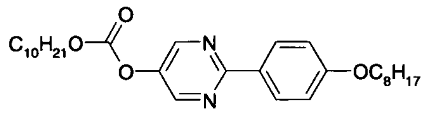 |
| Aa | 5% | 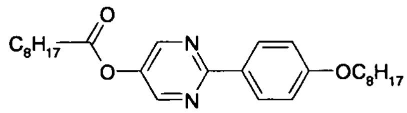 |
| Aa | 5% | 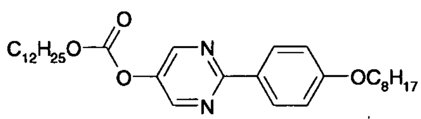 |
| Aa | 5% | 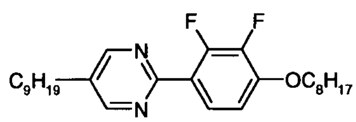 |
| Aa | 18% | 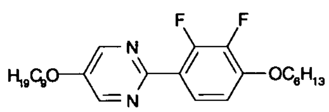 |
| B3a | 5% | 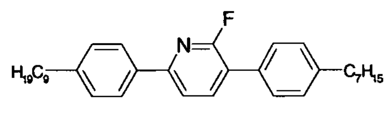 |
| B3a | 5% | 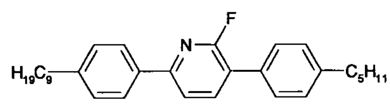 |
| B3 | 5% | 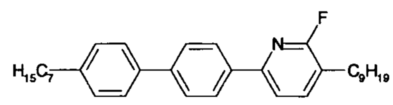 |
| d3 | 5% | 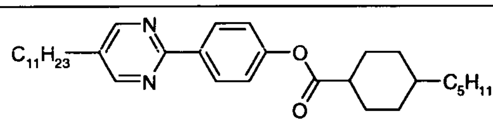 |
| d3 | 5% | 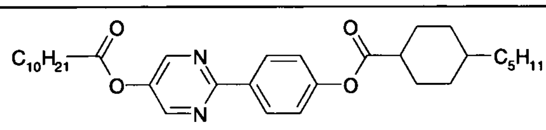 |
| d3 | 5% | 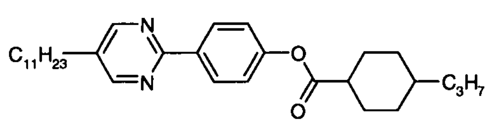 |

| | | |
|---|---|---|
| d3 | 5% | 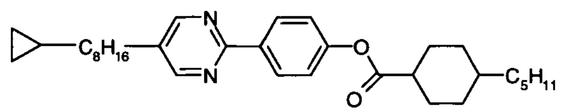 |
| d3 | 5% | 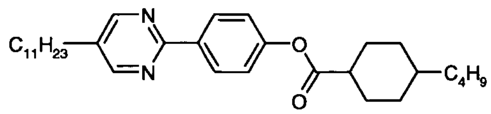 |
| X1 | 5% | 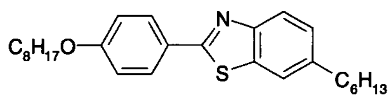 |
| X2 | 5% | 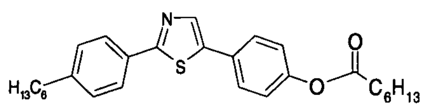 |
| X2 | 5% | 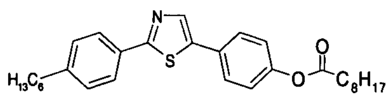 |
| C | 7% | 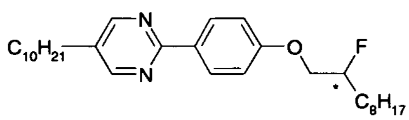 |

Example 3

LC-4 was prepared by mixing the following compounds including materials out of group B2 and B3 in Table-2. Physical properties and the high and low temperature driving limits and ΔT are summarized in Table-1A. Table-1B show the material groups for each mixture.

Example 4

LC-5 was also prepared by mixing the following compounds including materials out of group B2 and B3 in Table-2. Physical properties and the high and low temperature driving limits and ΔT are summarized in Table-1A. Table-1B show the material groups for each mixture.

Example 5

LC-6 was also prepared by mixing the following compounds including materials out of group B2 and B3 in Table-2. Physical properties and the high and low temperature driving limits and ΔT are summarized in Table-1A. Table-1B show the material groups for each mixture.

Example 6

LC-7 was prepared by mixing the following compounds including materials out of group B2, B3 and B3 in Table-2. Physical properties and the high and low temperature driving limits and ΔT are summarized in Table-1A. Table-1B show the material groups for each mixture.

Example 7

LC-8 was also prepared by mixing the following compounds including materials out of group B2, B3 and B3 in Table-2.
Physical properties and the high and low temperature driving limits and ΔT are summarized in Table-1A.
Table-1B show the material groups for each mixture.

Example 8

LC-9 was also prepared by mixing the following compounds including materials out of group B2, B3 and B3 in Table-2.
Physical properties and the high and low temperature driving limits and ΔT are summarized in Table-1A.
Table-1B show the material groups for each mixture.

Table-1A:

| Sample | Phase Trans.Temp. (°C) | | Ps | LT | HT | ΔT |
|---|---|---|---|---|---|---|
| | Sc*→Ch | Ch→Iso | ($nC/cm^2$, @25°C) | (°C) | (°C) | (°C) |
| LC-1 | 65 | 87 | 3 | 1 | 60 | 59 |
| LC-2 | 97,6 | 115,6 | 11 | -4 | 92,6 | 96,6 |
| LC-3 | 92,5 | 105,8 | 10 | -8 | 87,5 | 95,5 |
| LC-4 | 95,6 | 100,3 | 9,1 | -14 | 90,6 | 104,6 |
| LC-5 | 97,3 | 104,1 | 11,5 | -15 | 92,3 | 107,3 |
| LC-6 | 96,9 | 112,8 | 11 | -15 | 91,9 | 106,9 |
| LC-7 | 95,5 | 107,8 | 15 | -13 | 90,5 | 103,5 |
| LC-8 | 98,2 | 117 | 11,9 | -15 | 93,2 | 108,2 |
| LC-9 | 100,1 | 117 | 12,1 | -16 | 95,1 | 111,1 |

HT = High temperature driving limit
LT = Low temperature driving limit
ΔT = HT - LT

Table-1B:

| Sample | A | B | | | D | X | C |
|---|---|---|---|---|---|---|---|
| | | B2 | B3 | B4 | | | |
| LC-1 | **X** | | | | **X** | | **X** |
| LC-2 | **X** | **X** | | | **X** | **X** | **X** |
| LC-3 | **X** | | **X** | | **X** | **X** | **X** |
| LC-4 | **X** | **X** | **X** | | **X** | **X** | **X** |
| LC-5 | **X** | **X** | **X** | | **X** | **X** | **X** |
| LC-6 | **X** | **X** | **X** | | **X** | **X** | **X** |
| LC-7 | **X** | **X** | **X** | **X** | **X** | **X** | **X** |
| LC-8 | **X** | **X** | **X** | **X** | **X** | **X** | **X** |
| LC-9 | **X** | **X** | **X** | **X** | **X** | **X** | **X** |

All examples show, that the mixtures according to the invention exhibit wider operation temperature ranges

and higher resp. lower temperature driving limits.

Table-2:

| Group | Structure | R1 | R2 | LC-4 | LC-5 | LC-6 | LC-7 | LC-8 | LC-9 |
|---|---|---|---|---|---|---|---|---|---|
| A | 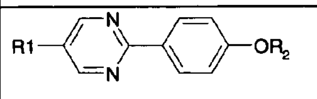 | C11O | C6 | 12% | 13% | 3% | 9% | 2% | 2% |
| | 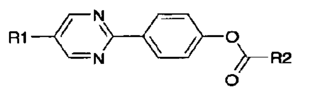 | C10 | C7 | 4% | 3% | 3% | 3% | 2% | 2% |
| | 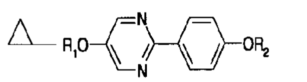 | C8 | C8 | 4% | 3% | | 3% | | |
| | 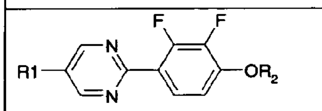 | C9O | C6 | 6% | 4% | 8% | 5% | 7% | 7% |
| | 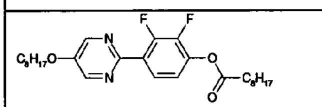 | | | | | | | 2% | 2% |
| | 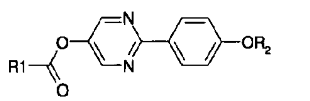 | C8 | C6 | 6% | 8% | | 5% | | |
| | | C8 | C8 | 4% | 3% | | 3% | | |
| | | C5 | C8 | | | | | 4% | 4% |
| | | C9 | C8 | 4% | 3% | 3% | 3% | 2% | 2% |
| | | C8O | C8 | 4% | 5% | | 3% | | |
| B2 | 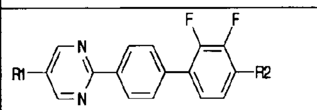 | C9 | C5 | 12% | 13% | 17% | 9% | 20% | 10% |
| | | C10 | C5 | | | | | | 14% |
| B3 | 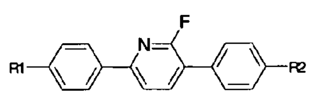 | C9 | C7 | 9% | 10% | 12% | 7% | 10% | 10% |
| | | C8O | C6 | 6% | 5% | 3% | | | |
| | | C9 | C5 | 6% | 8% | 8% | 5% | 6% | 6% |
| B4 | 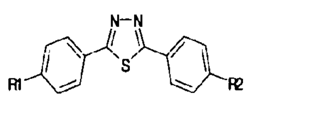 | C4 | C7 | | | | | 6% | 6% |
| | | C2 | C8 | | | | 5% | | |
| | | C5 | C7 | | | | 8% | 15% | 14% |
| d | 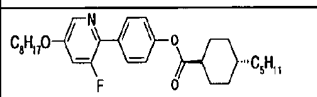 | | | | 3% | | | | |
| | 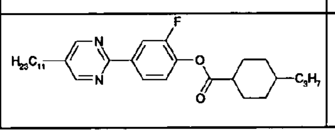 | | | | | 10% | 5% | 9% | 8% |

| Group | Structure | R1 | R2 | LC-4 | LC-5 | LC-6 | LC-7 | LC-8 | LC-9 |
|---|---|---|---|---|---|---|---|---|---|
| d | 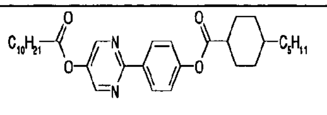 | | | 3% | | | | | |
| | 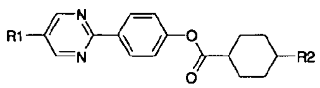 | C14 | C5 | | | 5% | 7% | 4% | 4% |
| | | C12 | C4 | | | 5% | | | |
| | | C12 | C5 | | | 3% | | | |
| | | C11 | C4 | | | 5% | | 4% | 4% |
| | 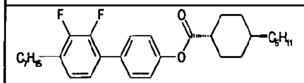 | | | 6% | 8% | | | | |
| X3 | 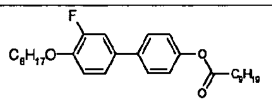 | | | 4% | | | | | |
| X1 | 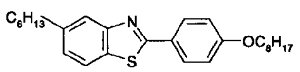 | | | 3% | 3% | 10% | 5% | | |
| X2 | 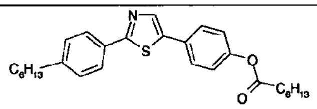 | | | 4% | 3% | | 10% | 2% | 2% |
| C | 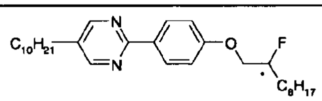 | | | 7% | 7% | 7% | 7% | 7% | 7% |

## Claims

1. A chiral smectic liquid crystal mixture having a spontaneous polarisation of < 20 nC/cm$^2$, comprising at least 1 compound from each of the groups A (consisting of Aa and Ab) and B of achiral materials and C of chiral materials

$$R^1\text{-}A^1\text{-}A^2\text{–}R^2 \quad R^1\text{-}A^1\text{-}A^2\text{–}B\text{-}R^2$$

**Aa** **Ab**

$$R^3\text{-}(\text{-}A^3\text{-}M^3)_a\text{-}E^1\text{-}(M^4\text{-}A^4)_b\text{-}R^4$$

**B**

$$R^5\text{-}(\text{-}A^5\text{-}M^5)_c(\text{-}A^6\text{-}M^6)_d(\text{-}A^7\text{-}M^7)_e(\text{-}A^8\text{-}M^8)_f\text{-}R^6$$

**C**

with the meaning

**a, b** 0, 1 or 2 , the sum of a and b 2 or 3
**c, d, e, f** 0 or 1, the sum of c and d and e and f 2 or 3 or 4
**$R^1$, $R^2$, $R^3$, $R^4$** independently Hydrogen, alkyl or alkyloxy with 1 to 16 C atoms, alkenyl or alkenyloxy with 2 to 16 C atoms, wherein in either case

a1) one or two non-terminal non-adjacent $-CH_2-$ groups can be replaced by -O- , -OC(=O)- , -(C=O), -C(=O)O-, $-Si(CH_3)_2-$, -C≡C- and wherein also one or several $-CH_2-$ groups can be replaced by $-CF_2-$
a2) one $-CH_2-$ group can be replaced by phenylene-1,4-diyl (optionally substituted once or twice by F ), cyclohexane-1,4-diyl (optionally substituted by F or CN) oder cylopropane-1,2-diyl

with the proviso that within the couples $R^1$ / $R^2$ and $R^3$ / $R^4$, resp., only one can be Hydrogen

**$R^5$** Hydrogen, alkyl or alkyloxy with 1 to 16 C atoms, alkenyl or alkenyloxy with 2 to 16 C atoms, wherein one or two non-adjacent $-CH_2-$ groups can be replaced by - OC(=O)- or -C(=O)O- or $-Si(CH_3)_2-$ oder cylopropan-1,2-diyl and wherein also one or several $-CH_2-$ groups can be replaced by $-CF_2-$; or $R^6$
**$R^6$** a moiety with at least one asymmetric C atom, which is
either part of an alkyl group of 3-12 C atoms, wherein also one or two $-CH_2-$ groups can be replaced by -O- or -OC(=O) or -C(=O)O- and wherein at least one of the substituents at the asymmetric C atom is selected from $-CH_3$, $-CF_3$ , $-OCH_3$, $-CH_3$, Cl , F
or part of a 3-7 membered carbocycle (wherein also one or two non-adjacent $-CH_2-$groups can replaced by -O- or a $-CH_2-$ group can be replaced by -OC(=O)- or -C(=O)O-)
**B:** phenylene-1,4-diyl or cyclohexan-1,4-diyl
**$E^1$** 2,3-difluoro-phenylene-1,4-diyl or 2-fluoro-pyridine-3,6-diyl or (1,3,4)thiadiazole-2,5-diyl
**$A^1$, $A^2$** independently phenylene-1,4-diyl, 2-fluoro-phenylene-1,4-diyl, 2,3-difluorophenylene-1,4-diyl, pyrimidine-2,5-diyl, pyridine-2,5-diyl

with the provisos
in compound Aa one of $A^1$ / $A^2$ is pyrimidine-2,5-diyl or pyridine-2,5-diyl in compound Ab one of $A^1$/$A^2$ is pyrimidine-2,5-diyl or pyridine-2,5-diyl, the other is phenylene-1,4-diyl or cyclohexane-1,4-diyl

**$A^3$, $A^4$** independently phenylene-1,4-diyl, optionally substituted by one or two F, cyclohexane-1,4-diyl,optionally substituted by F, $CH_3$ or CN, pyridine-2,5-diyl, pyrimidine-2,5-diyl, 1,3-dioxane-2,5-diyl, 1,3-dioxaborinane-2,5-diyl
**$A^5$, $A^6$, $A^7$, $A^8$** independently phenylene-1,4-diyl, optionally substituted by one or two F, cyclohexane-1,4-diyl, optionally substituted by F, $CH_3$ or CN, cyclohex-1-en-1,4-diyl, optionally substituted by F, $CH_3$ or CN, cyclohex-2-en-1,4-diyl, optionally substituted by F, $CH_3$ or CN, 1-alkyl-1-sila-cyclohexane-1,4-diyl, bicyclo[2.2.2]octan-1,4-diyl, indane-2,6-diyl, optionally substituted by one or several F, naphthalene-2,6-diyl, optionally substituted by one or several F, 1,2,3,-4-tetrahydronaphthalene-2,6-diyl, optionally substituted by one or several F, phenanthrene-2,7-diyl, optionally substitued by one or several F, 9,10-dihydrophenanthrene-2,5-diyl, optionally substituted by one or several F, fluorene-2,7-diyl, optionally substituted by one or several F, dibenzofuran, optionally substituted by one or several F, pyridine-2,5-diyl, 2-fluoro-pyridine-3,6-diyl, 3-fluoro-pyridine-2,5-diyl, pyrimidine-2,5-diyl, 4-fluoro-pyrimidine-2,5-diyl, thiazole-2,5-diyl, optionally substituted by F, thiazole-2,4-diyl, optionally substituted by F, thiadiazole-2,5-diyl, isoxazole-3,5-diyl, dioxane-2,5-diyl, 1,3-dioxaborinane-2,5-diyl, benzthiazole-2,5-diyl, benzthiazole-2,6-diyl
**$M^3$, $M^4$, $M^5$, $M^6$, $M^7$, $M^8$** , independently single bond, -OC(=O)-, -C(=O)O-, -OC(=O)O-, $-CH_2O-$, $-OCH_2-$, $-CF_2O-$, $-OCF_2-$, $-CH_2CH_2-$, -CH=CH-, $-CH_2-O-CH_2CH_2-$, $-CH_2CH_2CH_2CH_2$ - or -C≡C.

2. A chiral smectic liquid crystal mixture according to claim 1, wherein the mixture comprises at least 3 compounds B out of at least 2 different groups B2, B3 and B4

$$R^3(-A^3-M^3)_a-E^2-(M^4-A^4)_b -R^4$$

**B2**

wherein $E^2$ is 2,3-difluoro-phenylene-1,4-diyl

$$R^3(-A^3-M^3)_a-E^3-(M^4-A^4)_b -R^4$$

**B3**

wherein $E^3$ is 2-fluoro-pyridine-3,6-diyl

$$R^3(-A^3-M^3)_a-E^4-(M^4-A^4)_b-R^4$$

**B4**

wherein $E^4$ is (1,3,4)thiadiazole-2,5-diyl

**3.** A chiral smectic liquid crystal mixture according to claim 1 or 2 wherein B3 is a compound of the formula B3a and B4 is a compound of the formula B4a

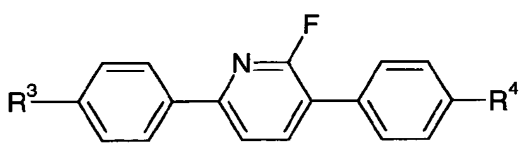

**B3a**

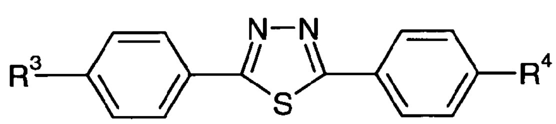

**B4a**

**4.** A chiral smectic liquid crystal mixture according to one of the preceding claims,
wherein the mixture comprises at least 5 compounds out of B2, B3 and B4.

**5.** A chiral smectic liquid crystal mixture according to one of the preceding claims, wherein the mixture additionally comprises at least 1 compound D

$$R^1-A^{11}-A^{12}-M^{12}-A^{13}-R^2$$

**D**

with the meaning

**$A^{11}$, $A^{12}$** independently phenylene-1,4-diyl, 2-fluoro-phenylene-1,4-diyl, 2,3-difluorophenylene-1,4-diyl, pyrimidine-2,5-diyl, pyridine-2,5-diyl, 3-fluoro-pyridine-2,5-diyl
**$A^{13}$** cyclohexane-1,4-diyl, 1-cyclohexen-1,-4-diyl, 2-cyclohexen-1,4-diyl, thiophene-2,5-diyl, optionally substituted by F, or thiophene-2,4-diyl, optionally substituted by F
**$M^{12}$** -OC(=O)- , $-OCH_2-$, -C(=O)O-, $-CH_2O-$ or -OC(=O)O-
with the proviso that at least one of $A^{11}$ , $A^{12}$ is pyrimidine-2,5-diyl or pyridine-2,5-diyl or 3-fluoro-pyridine-2,5-diyl
**$R^1$, $R^2$** as indicated in claim 1.

**6.** A chiral smectic liquid crystal mixture according to one of the preceding claims, wherein the mixture additionally comprises at least 1 compound E

$$R^1\text{-}A^{14}\text{-}M^{14}\text{-}A^{15}\text{-}M^{16}\text{-}A^{16}\text{-}M^{16}\text{-}A^{17}\text{-}R^2$$

**E**

with the meaning

**$A^{14}$, $A^{15}$ $A^{16}$, $A^{17}$** independently phenylene-1,4-diyl, optionally substituted by one or two F, cyclohexane-1,4-diyl, optionally substituted by F, $CH_3$ or CN, cyclohex-1-en-1,4-diyl, optionally substituted by F, $CH_3$ or CN, cyclohex-2-en-1,4-diyl, optionally substituted by F, $CH_3$ or CN, 1-alkyl-1-sila-cyclohexane-1,4-diyl, bicyclo [2.2.2]octarl-1,4-diyl, indane-2,6-diyl, optionally substituted by one or several F, naphthalene-2,6-diyl, optionally substituted by one or several F, 1,2,3,-4-tetrahydronaphthalene-2,6-diyl, optionally substituted by one or several F, phenanthrene-2,7-diyl, optionally substitued by one or several F, 9,10-dihydrophenanthrene-2,5-diyl, optionally substituted by one or several F, fluorene-2,7-diyl, optionally substituted by one or several F, dibenzofuran, optionally substituted by one or several F, pyridine-2,5-diyl, 2-fluoro-pyridine-3,6-diyl, 3-fluoro-pyridine-2,5-diyl, pyrimidine-2,5-diyl, 4-fluoro-pyrimidine-2,5-diyl, thiazole-2,5-diyl, optionally substituted by F, thiazole-2,4-diyl, optionally substituted by F, thiadiazole-2,5-diyl, isoxazole-3,5-diyl, dioxane-2,5-diyl, 1,3-dioxaborinane-2,5-diyl

**$M^{14}$ , $M^{15}$, $M^{16}$** independently a single bond, -OC(=O)-, -C(=O)O-, -OC(=O)O-, $-CH_2O-$, $-OCH_2-$, $-CF_2O-$, $-OCF_2-$, $-CH_2CH_2-$, -CH=CH-, $-CH_2\text{-}O\text{-}CH_2CH_2-$, $-CH_2CH_2CH_2CH_2-$ or -C≡C-

**$R^1$, $R^2$** as indicated in claim 1.

**7.** A chiral smectic liquid crystal mixture according to one of the preceeding claims wherein the compounds of group B constitute at least 10% by weight of the total mixture.

**8.** Active matrix liquid crystal device, comprising a chiral smectic liquid crystal mixture according to one of claims 1 to 7.

**9.** Active matrix liquid crystal device according to claim 8 comprising the chiral smectic liquid crystal mixture in monostable orientation.

**10.** Active matrix liquid crystal device according to claims 8 or 9 comprising the chiral smectic liquid crystal mixture in monostable orientation, selected from the group consisting of half V-shape, V-shape, CDR or short-pitch and polymer-stabilized versions thereof.

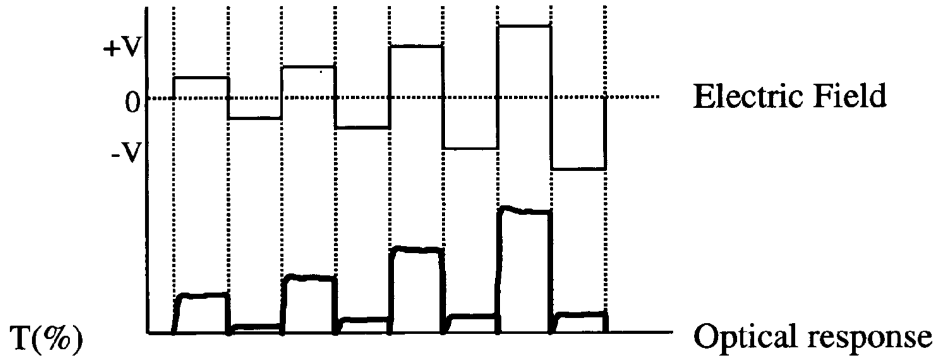
+V
0
-V
Electric Field
T(%)
Optical response

Fig. 1

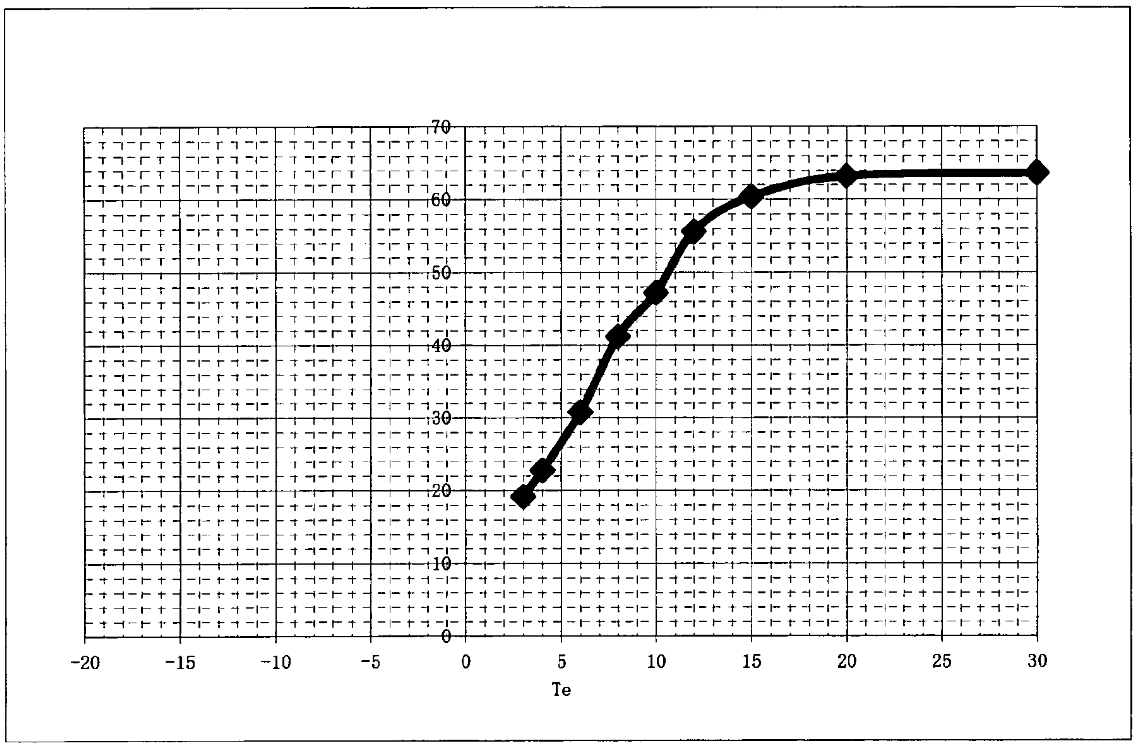
70
60
50
40
30
20
10
0
-20
-15
-10
-5
0
5
10
15
20
25
30
Te

Fig. 2

European Patent Office

# PARTIAL EUROPEAN SEARCH REPORT

which under Rule 45 of the European Patent Convention shall be considered, for the purposes of subsequent proceedings, as the European search report

Application Number
EP 04 00 9863

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 589 103 A (NAKAMURA SHINICHI ET AL) 31 December 1996 (1996-12-31)<br>* columns 85-91; examples 15,17,19 *<br>* columns 135-137; examples 54,55 *<br>----- | 1,6-8 | C09K19/34 |
| X | EP 0 350 893 A (CANON KK) 17 January 1990 (1990-01-17)<br>* pages 93-94; example 16 *<br>----- | 1,5 | |
| X | US 5 422 748 A (YAMASHITA MASATAKA ET AL) 6 June 1995 (1995-06-06)<br>* columns 38-42; example 1; tables 1,2 *<br>----- | 1,5,7 | |
| X<br><br>Y | DE 198 57 352 A (CLARIANT GMBH) 15 June 2000 (2000-06-15)<br>* pages 46-47; examples 9,12,14 *<br>----- | 1,5,7<br><br>1-10 | |
| X | US 6 605 323 B1 (WINGEN RAINER ET AL) 12 August 2003 (2003-08-12)<br>* columns 8-9; examples 2,5 *<br>----- | 1,7 | TECHNICAL FIELDS SEARCHED (Int.Cl.7) |
| X | US 6 551 668 B1 (WINGEN RAINER ET AL) 22 April 2003 (2003-04-22)<br>* columns 15-18; examples 2-6 *<br>-----<br>-/-- | 1,4-7 | C09K |

## INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

2

| Place of search | Date of completion of the search | Examiner |
|---|---|---|
| Munich | 27 July 2004 | Kiernan, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C07)

European Patent Office

# PARTIAL EUROPEAN SEARCH REPORT

Application Number
EP 04 00 9863

| Category | Citation of document with indication, where appropriate, of relevant passages | Relevant to claim | CLASSIFICATION OF THE APPLICATION (Int.Cl.7) |
|---|---|---|---|
| X | US 2002/195585 A1 (THURMES WILLIAM N ET AL) 26 December 2002 (2002-12-26)<br>* pages 19-42; tables 3-12,15 * | 1,5,7 | |
| X | EP 0 332 007 A (MERCK PATENT GMBH) 13 September 1989 (1989-09-13)<br>* page 13; example B * | 1,2,7 | |
| X | DE 38 07 955 A (MERCK PATENT GMBH) 21 September 1989 (1989-09-21)<br>* page 7; example B * | 1,2,7 | |
| X | EP 0 332 024 A (MERCK PATENT GMBH) 13 September 1989 (1989-09-13)<br>* page 16; example B * | 1 | TECHNICAL FIELDS SEARCHED (Int.Cl.7) |
| X<br>Y | US 5 248 447 A (REIFFENRATH VOLKER ET AL) 28 September 1993 (1993-09-28)<br>* column 16; example B * | 1,2,7<br>1-10 | |
| X | EP 0 552 658 A (HOECHST AG) 28 July 1993 (1993-07-28)<br>* page 16; example 4 * | 1 | |
| X<br>Y | US 5 876 628 A (WINGEN RAINER ET AL) 2 March 1999 (1999-03-02)<br>* columns 24-25; example 44 *<br>* columns 32-37; examples 48,49 * | 1,5-7<br>1-10 | |
| X<br>Y | US 6 171 519 B1 (MANERO JAVIER ET AL) 9 January 2001 (2001-01-09)<br>* columns 47-62; examples 4,6,7,9-31 * | 1-3,7<br>1-10 | |

2

EPO FORM 1503 03.82 (P04C10)

European Patent Office

**INCOMPLETE SEARCH SHEET C**

Application Number
EP 04 00 9863

Claim(s) searched incompletely:
1-10

Claim(s) not searched:
-

Reason for the limitation of the search:

The initial phase of the search revealed a very large number of documents relevant to the issue of novelty. So many documents were retrieved that it is impossible to determine which parts of the claims may be said to define subject-matter for which protection might legitimately be sought (Article 84 EPC).

Moreover, present claims 1-7 relate to an extremely large number of possible compounds/products. Support within the meaning of Article 84 EPC and/or disclosure within the meaning of Article 83 EPC is to be found, however, for only a very small proportion of the compounds/products claimed. In the present case, the claims so lack support, and the application so lacks disclosure, that a meaningful search over the whole of the claimed scope is impossible.

For these reasons, a meaningful search over the whole breadth of the claims is impossible. Consequently, the search has been carried out for those parts of the claims which appear to be supported and disclosed, namely liquid crystal mixtures containing at least 1 compound of the group Aa wherein one of A1 / A2 is pyrimidine-2,5-diyl, at least 1 compound of the group B and at least 1 compound of the group C.

## ANNEX TO THE EUROPEAN SEARCH REPORT ON EUROPEAN PATENT APPLICATION NO. EP 04 00 9863

This annex lists the patent family members relating to the patent documents cited in the above-mentioned European search report.
The members are as contained in the European Patent Office EDP file on
The European Patent Office is in no way liable for these particulars which are merely given for the purpose of information.

27-07-2004

| Patent document cited in search report | Publication date | Patent family member(s) | Publication date |
|---|---|---|---|
| US 5589103 A | 31-12-1996 | JP 2952141 B2 | 20-09-1999 |
| | | JP 6256231 A | 13-09-1994 |
| | | DE 69406468 D1 | 04-12-1997 |
| | | DE 69406468 T2 | 19-03-1998 |
| | | EP 0606090 A1 | 13-07-1994 |
| EP 0350893 A | 17-01-1990 | JP 2206680 A | 16-08-1990 |
| | | JP 3012479 A | 21-01-1991 |
| | | JP 2024386 A | 26-01-1990 |
| | | AT 101187 T | 15-02-1994 |
| | | DE 68912836 D1 | 17-03-1994 |
| | | DE 68912836 T2 | 01-06-1994 |
| | | EP 0350893 A1 | 17-01-1990 |
| | | US 5186858 A | 16-02-1993 |
| US 5422748 A | 06-06-1995 | JP 2952122 B2 | 20-09-1999 |
| | | JP 5224241 A | 03-09-1993 |
| DE 19857352 A | 15-06-2000 | DE 19857352 A1 | 15-06-2000 |
| | | DE 59909705 D1 | 15-07-2004 |
| | | WO 0036054 A1 | 22-06-2000 |
| | | EP 1147162 A1 | 24-10-2001 |
| | | JP 2002532613 T | 02-10-2002 |
| | | US 6746731 B1 | 08-06-2004 |
| US 6605323 B1 | 12-08-2003 | DE 19825488 A1 | 09-12-1999 |
| | | DE 59907556 D1 | 04-12-2003 |
| | | WO 9964537 A1 | 16-12-1999 |
| | | EP 1086193 A1 | 28-03-2001 |
| | | JP 2002517597 T | 18-06-2002 |
| US 6551668 B1 | 22-04-2003 | DE 19825484 A1 | 09-12-1999 |
| | | DE 19830203 A1 | 13-01-2000 |
| | | DE 59905658 D1 | 26-06-2003 |
| | | WO 9964538 A1 | 16-12-1999 |
| | | EP 1086194 A1 | 28-03-2001 |
| | | JP 2002517598 T | 18-06-2002 |
| US 2002195585 A1 | 26-12-2002 | NONE | |
| EP 0332007 A | 13-09-1989 | DE 3807801 A1 | 21-09-1989 |
| | | AT 82744 T | 15-12-1992 |
| | | AU 3188889 A | 05-10-1989 |
| | | CN 1040024 A | 28-02-1990 |
| | | DE 58902788 D1 | 07-01-1993 |
| | | WO 8908637 A1 | 21-09-1989 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 04 00 9863

This annex lists the patent family members relating to the patent documents cited in the above-mentioned European search report.
The members are as contained in the European Patent Office EDP file on
The European Patent Office is in no way liable for these particulars which are merely given for the purpose of information.

27-07-2004

| Patent document cited in search report | | Publication date | Patent family member(s) | | | Publication date |
|---|---|---|---|---|---|---|
| EP 0332007 | A | | EP | 0332007 | A1 | 13-09-1989 |
| | | | EP | 0373186 | A1 | 20-06-1990 |
| | | | JP | 2567288 | B2 | 25-12-1996 |
| | | | JP | 2503568 | T | 25-10-1990 |
| | | | KR | 9210640 | B1 | 12-12-1992 |
| | | | NO | 894476 | A | 09-11-1989 |
| | | | US | 5248447 | A | 28-09-1993 |
| DE 3807955 | A | 21-09-1989 | DE | 3807955 | A1 | 21-09-1989 |
| | | | DE | 58903514 | D1 | 25-03-1993 |
| | | | WO | 8908688 | A1 | 21-09-1989 |
| | | | EP | 0358741 | A1 | 21-03-1990 |
| | | | JP | 2503431 | T | 18-10-1990 |
| | | | US | 5230827 | A | 27-07-1993 |
| EP 0332024 | A | 13-09-1989 | DE | 3807871 | A1 | 21-09-1989 |
| | | | AT | 108445 | T | 15-07-1994 |
| | | | DE | 58908042 | D1 | 18-08-1994 |
| | | | WO | 8908649 | A1 | 21-09-1989 |
| | | | EP | 0332024 | A1 | 13-09-1989 |
| | | | EP | 0373191 | A1 | 20-06-1990 |
| | | | JP | 2503434 | T | 18-10-1990 |
| | | | JP | 2811341 | B2 | 15-10-1998 |
| | | | NO | 894478 | A | 09-11-1989 |
| | | | US | 5209866 | A | 11-05-1993 |
| US 5248447 | A | 28-09-1993 | DE | 3807801 | A1 | 21-09-1989 |
| | | | AT | 82744 | T | 15-12-1992 |
| | | | AU | 3188889 | A | 05-10-1989 |
| | | | CN | 1040024 | A | 28-02-1990 |
| | | | DE | 58902788 | D1 | 07-01-1993 |
| | | | WO | 8908637 | A1 | 21-09-1989 |
| | | | EP | 0332007 | A1 | 13-09-1989 |
| | | | EP | 0373186 | A1 | 20-06-1990 |
| | | | JP | 2567288 | B2 | 25-12-1996 |
| | | | JP | 2503568 | T | 25-10-1990 |
| | | | KR | 9210640 | B1 | 12-12-1992 |
| | | | NO | 894476 | A | 09-11-1989 |
| EP 0552658 | A | 28-07-1993 | DE | 59310170 | D1 | 28-06-2001 |
| | | | EP | 0552658 | A1 | 28-07-1993 |
| | | | JP | 5279299 | A | 26-10-1993 |
| | | | US | 5679792 | A | 21-10-1997 |
| US 5876628 | A | 02-03-1999 | JP | 3377826 | B2 | 17-02-2003 |
| | | | JP | 6312959 | A | 08-11-1994 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 04 00 9863

This annex lists the patent family members relating to the patent documents cited in the above-mentioned European search report.
The members are as contained in the European Patent Office EDP file on
The European Patent Office is in no way liable for these particulars which are merely given for the purpose of information.

27-07-2004

| Patent document cited in search report | Publication date | Patent family member(s) | Publication date |
|---|---|---|---|
| US 5876628 A | | DE 69426358 D1 | 04-01-2001 |
| | | DE 69426358 T2 | 12-07-2001 |
| | | EP 0697017 A1 | 21-02-1996 |
| | | WO 9426720 A1 | 24-11-1994 |
| US 6171519 B1 | 09-01-2001 | JP 9031459 A | 04-02-1997 |
| | | JP 9183973 A | 15-07-1997 |
| | | EP 0839173 A1 | 06-05-1998 |
| | | JP 2000505822 T | 16-05-2000 |
| | | CN 1214073 A | 14-04-1999 |
| | | WO 9704039 A1 | 06-02-1997 |
| | | DE 59606922 D1 | 21-06-2001 |
| | | WO 9724351 A1 | 10-07-1997 |
| | | EP 0883618 A1 | 16-12-1998 |
| | | JP 2000502688 T | 07-03-2000 |
| | | US 6022492 A | 08-02-2000 |

EPO FORM P0459

For more details about this annex : see Official Journal of the European Patent Office, No. 12/82